# EUROPEAN PATENT SPECIFICATION

(11) **EP 1 726 544 B1**
(45) Date of publication and mention of the grant of the patent: **24.12.2008**
(21) Application number: 06076090.7
(22) Date of filing: 23.05.2006
(51) Int. Cl.: B65G 47/51

(54) **Conveyor device with buffer system**
Fördervorrichtung mit Puffersystem
Conveyeur avec système tampon

(30) Priority: 26.05.2005 NL 1029141
(43) Date of publication of application: 29.11.2006
(73) Proprietor: Speciaalmachinefabriek Van Uitert B.V., 5107 RD Dongen (NL)
(72) Inventor: Van Dieën, Wilhelmus Antonius Maria, 5171 Kaatsheuvel (NL)
(74) Representative: Lips, Hendrik Jan George

(56) References cited:
- EP-A- 1 390 282
- WO-A-20/05118439
- DE-C- 268 218
- US-A- 3 038 584

## Description

The invention relates to a conveyor device having a buffer system comprising a feed conveyor belt and a discharge conveyor belt extending parallel to and at a small distance from each other, said conveyor belts being drivable in opposite directions, a reciprocating diverting rail being provided above said conveyor belts, said rail being connected to a guiding plate situated between said conveyor belts at some distance from the diverting rail so that objects can move between said diverting rail and said guiding plate, whereby the conveyor device comprises a feed conveyor connecting to the feed conveyor belt of the buffer system and a discharge conveyor connecting to the discharge conveyor belt of the buffer system, in which the velocities of feed and discharge conveyor can be controlled separately by means of detectors positioned near said feed and said discharge conveyor.

Such a conveyor device is known from PCT/US2004/037233 and in particular the figures 12 - 14 of this teaching the preamble of claim 1. Obviously it will be rather difficult to control the velocities of said conveyors such that the number of objects fed by said feed conveyor is equal to the number of objects removed by said discharged conveyor. In case of said known device said buffer system serves for receiving objects when the amount of fed objects exceeds the amount of objects removed by said discharge conveyor.

The latter can also occur when e.g. a defect occurs during discharge of the objects, either in the discharge itself or in the devices connected to it. Such devices can be in the form of e.g. an autoclave, a bottle or can filling machine, a labelling machine and the like.

In particular in this case it is wanted that the capacity of said buffer system is as large as possible, because it will take some time to stop the feed system and in particular the device either devices which deliver objects to said feed system.

So it is prefered that in normal circumstances the number of objects present on said buffer system is as low as possible so that the maximum capacity of said buffer system is continiously available.

The invention is according to the appended claim 1.

By means of said detector or detectors it can be controlled whether many or fewer objects are present on said buffer system and the velocity of various parts can be adapted such that the number of objects is as small as possible. This also means that the flow of objects along said conveyor device is equalized as much as possible.

When the detector(s) mounted at the diverting rail sense(s) that an insufficient number of objects is discharged, the diverting rail will slowly start moving away from its normal position near the feed and discharge conveyor, so that the feed and discharge conveyor belts of the buffer system as well as the discharge conveyor will gradually get more or less fully occupied with objects.

As soon as the detector of the diverting rail senses, that the number of objects there decreases, the diverting rail will be stopped and then possibly will return to its normal position. After that, the number of objects located on the conveyor belts of the buffer system and on the discharge conveyor will again start approximating the normal number.

An end switch will be provided at both ends of the moving path of the diverting rail. When for example the blocking in the discharge takes so long that the diverting rail reaches its end position, an end switch causes the movement of the division rail to stop and the feed conveyor belt of the buffer system and the feed conveyor are stopped, while the discharge conveyor belt will remain moving across a very small distance. However, in case of an excessive advancement of objects, this belt too will be stopped in order to prevent damage to the objects.

When the discharge conveyor will start to discharge more objects, the detector(s) of the diverting rail will detect that there are less objects at the diverting rail again. Then, the feed conveyor and the feed conveyor belt of the buffer system will be set in motion again and with such velocity, that the diverting rail too will start returning to its normal position. When the diverting rail reaches its original position, the end switch will provide for that the diverting rail is stopped.

The invention is further explained by way of examples, illustrated in the drawing, in which:
fig. 1 schematically shows a plan view of a first embodiment of a conveyor device according to the invention; and
fig. 2 schematically shows a plan view of a second embodiment of a conveyor device according to the invention.

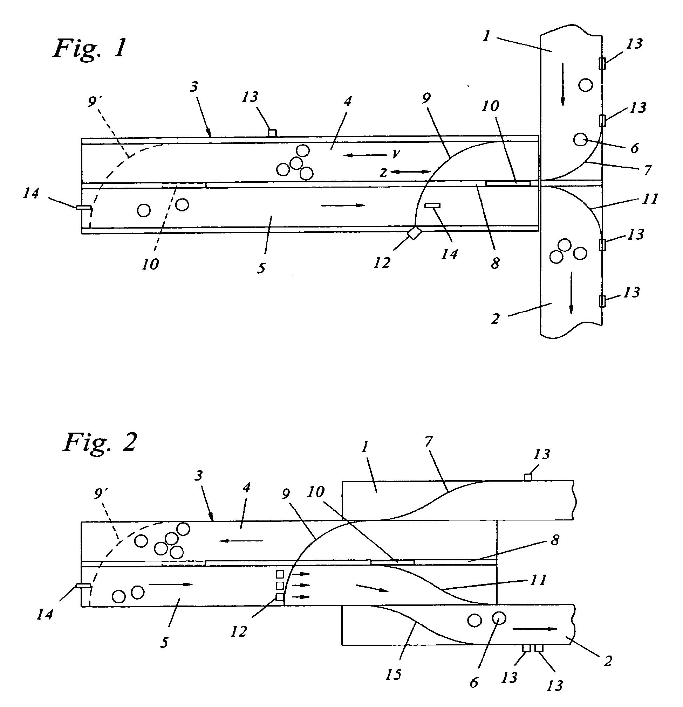

Fig. 1 shows a conveyor device comprising a feed conveyor 1, a discharge conveyor 2 and a buffer system 3 arranged near it, comprising a feed conveyor belt 4 and a discharge conveyor belt 5.

The direction of movement of the conveyors 1, 2 and of the conveyor belts 4, 5 is indicated by the arrows V.

A curved guide rail 7, connecting to a lateral guid 8, serves for guiding objects 6 from the feed conveyor 1 onto the feed conveyor belt 4.

Situated above the conveyor belts 4 and 5 of the buffer system 3 is the diverting rail 9, provided with a support mechanism not further indicated by which the diverting rail 9, starting from its normal position near feed and discharge conveyors 1, 2, can be moved to the left, as seen in the figure, towards the position 9' being indicated by dash lines in the figure. This movement is indicated by the double arrow Z.

The diverting rail 9 is connected to a guide plate 10, which sees to it that the objects 6 are not prematurely pushed onto the discharge conveyor belt 5 by the diverting rail 9. In the normal position of the diverting rail 9, the guide plate 10 will connect to the lateral guide 8, or be immediately next to it.

The discharge guide rail 11 serves for a proper discharge of objects 6 from the discharge conveyor belt 5 of the buffer system 3 onto the discharge conveyor 2, and can connect to said lateral guide 8.

The diverting rail 9 is provided with a detector 12, which can have various forms, as described above. Further, detectors 13 can be mounted at various locations along the conveyors 1, 2 and along the conveyor belts 4, 5. The signals from detetors 12, 13 can be processed in an electronic system from where the velocities of the various parts can be controlled, as likewise described earlier.

Further, two end switches 14 are provided, which are operated when the diverting rail 9 reaches the utmost left or utmost right position, as seen in the figure, indicated by 9' and 9, respectively. This prevents the diverting rail 9 or parts connected to it, such as the parts 10 and 12, for example, from interfering with other parts of the conveying device in an undesired way.

Fig. 2 shows a conveyor device corresponding largely to that of fig. 1, so that corresponding parts are indicated by the same reference numerals.

In this embodiment, the feed and discharge conveyors 1 and 2, respectively, extend parallel to and at some distance from one another, so that the buffer system 3 can be received between them. The diverting rails 7 and 11 will therefore have a slightly different shape than in the embodiment according to fig. 1, but will have the same function. Further, a guide rail 15 can be provided above the discharge conveyor 2.

In this embodiment, three detectors 12 are mounted to the diverting rail 9, their functions corresponding to those of the detector 12 of fig. 1. In the embodiment according to fig. 1 too, it is possible to employ more than one detector 12.

It will be clear, that only some possible embodiments of a conveyor device according to the invention have been illustrated in the drawing and described above and that many changes can be made within the scope of the appended claims.

## Claims

1. Conveyor device having a buffer system (3) comprising a feed conveyor belt (4) and a discharge conveyor belt (5) extending parallel to and at a small distance from each other, said conveyor belts (4,5) being drivable in opposite directions, a reciprocating diverting rail (9, 9') being provided above said conveyor belts (4, 5), said rail being connected to a guiding plate (10) situated between said conveyor belts at some distance from the diverting rail so that objects (6) can move between said diverting rail (9,9') and said guiding plate (10), whereby the conveyor device comprises a feed conveyor (1) connecting to the feed conveyor belt (4) of the buffer system (3) and a discharge conveyor (2) connecting to the discharge conveyor belt (5) of the buffer system, in which the velocities of feed (1) and discharge conveyor (2) can be controlled separately by means of detectors (13) positioned at said feed and said discharge conveyor, **characterized in that** one or more detectors (12) are mounted at that part of the diverting rail (9,9') situated above the discharge conveyor belt (5) of said buffer system (3), the detectors (12, 13) can have different forms, such as of feeler photocells or of ultrasonic feelers and the like, the signals supplied by said detectors (12, 13) being processed electronically and serve for controlling the velocities of the various parts (1, 2, 4, 5, 9, 10) of said conveyor device.

2. Conveyor device according to claim 1, **characterized in that** a curved guide rail (7) is provided above the feed conveyor (1), said rail having such a shape that the objects (6) from the feed conveyor (1) will be pushed onto the feed conveyor belt (4) of the buffer system (3) in an evenly distributed manner, with a stationary lateral guide (8) being situated between the conveyor belts (4, 5) of the buffer system (3).

3. Conveyor device according to claim 2, **characterized in that** the guiding plate (10) connects to the lateral guide (8) when the diverting rail (9, 9') is closest to the feed and discharge conveyors (1, 2).

4. Conveyor device according to one of the preceding claims, **characterized in that** a discharge guide rail (11), which can connect to the lateral guide (8), is provided at the transition of the discharge conveyor belt (5) of the buffer system (3) to the discharge conveyor (2).

5. Conveyor device according to one of the preceding claims, **characterized in that** the feed and discharge conveyors (1, 2) are almost aligned and that the conveyor belts (4, 5) of the buffer system (3) are square to said conveyors.

6. Conveyor device according to one of the claims 1 to 4, **characterized in that** the feed and discharge conveyors (1, 2) extend parallel to and at a slight distance from one another and that the conveyor belts (4, 5) of the buffer system (3) extend parallel to said feed and discharge conveyors (1, 2) of said buffer system and are partially situated between them.

7. Conveyor device according to one of the preceding claims, **characterized in that** detectors (13) are situated at the feed and discharge conveyors (1, 2), determining the degree of occupation of these conveyors and pass that information on to a track control unit, so that the velocities of the feed and discharge conveyors are adapted to one another as much as possible.

8. Conveyor device according to one of the preceding claims, **characterized in that** one or more detectors (13) are situated at the feed and discharge conveyor belts (4, 5) of the buffer system (3).

9. Conveyor device according to one of the preceding claims, **characterized in that** an end switch (14) is provided at both ends of the path of movement of the diverting rail (9, 9').

## Patentansprüche

1. Fördereinrichtung mit einem Puffersystem (3), umfassend ein Zuführförderband (4) und ein Abführförderband (5), welche sich parallel zueinander und in einem kleinen Abstand voneinander erstrecken, wobei die Förderbänder (4, 5) in entgegengesetzten Richtungen antreibbar sind, eine hin und her gehende Umlenkschiene (9, 9'), welche oberhalb der Förderbänder (4, 5) vorgesehen ist, wobei die Schiene mit einer Führungsplatte (10) verbunden ist, welche zwischen den Förderbändern in einem gewissen Abstand von der Umlenkschiene angeordnet ist, so dass Objekte (6) sich zwischen der Umlenkschiene (9, 9') und der Führungsplatte (10) bewegen können, wobei die Fördereinrichtung einen Zuführförderer (1), welcher an das Zuführförderband (4) des Puffersystems (3) anschließt, und einen Abführförderer (2), welcher an das Abführförderband (5) des Puffersystems anschließt, umfasst, wobei die Geschwindigkeiten des Zuführförderers (1) und des Abführförderers (2) separat gesteuert und/oder geregelt werden können mittels Detektoren (13), welche an dem Zuführ- und an dem Abführförderer positioniert sind, **dadurch gekennzeichnet, dass** ein oder mehrere Detektoren (12) in dem oberhalb des Abführförderbandes (5) des Puffersystems (3) befindlichen Teil der Umlenkschiene (9, 9') montiert sind, wobei die Detektoren (12, 13) verschiedene Formen aufweisen können, z.B. die Form von Fühler-Fotozellen oder von Ultraschallfühlern und dergleichen, wobei die von den Detektoren (12, 13) gelieferten Signale elektronisch verarbeitet werden und zum Steuern und/oder Regeln der Geschwindigkeiten der verschiedenen Teile (1, 2, 4, 5, 9, 10) der Fördereinrichtung dienen.

2. Fördereinrichtung nach Anspruch 1, **dadurch gekennzeichnet, dass** eine gekrümmte Führungsschiene (7) oberhalb des Zuführförderers (1) vorgesehen ist, wobei die Schiene eine solche Form aufweist, dass die Objekte (6) von dem Zuführförderer (1) in einer gleichmäßig verteilten Weise auf das Zuführförderband (4) des Puffersystems (3) geschoben werden, wobei eine stationäre seitliche Führung (8) zwischen den Förderbändern (4, 5) des Puffersystems (3) angeordnet ist.

3. Fördereinrichtung nach Anspruch 2, **dadurch gekennzeichnet, dass** die Führungsplatte (10) an die seitliche Führung (8) anschließt, wenn die Umlenkschiene (9, 9') dem Zuführ- und dem Abführförderer (1, 2) am nächsten ist.

4. Fördereinrichtung nach einem der voranstehenden Ansprüche, **dadurch gekennzeichnet, dass** eine Abführführungsschiene (11), welche an die seitliche Führung (8) anschließen kann, an dem Übergang von dem Abführförderband (5) des Puffersystems (3) zu dem Abführförderer (2) vorgesehen ist.

5. Fördereinrichtung nach einem der voranstehenden Ansprüche, **dadurch gekennzeichnet, dass** der Zuführ- und der Abführförderer (1, 2) nahezu fluchtend zueinander ausgerichtet sind und dass die Förderbänder (4, 5) des Puffersystems (3) rechtwinklig zu den Förderern sind.

6. Fördereinrichtung nach einem der Ansprüche 1 bis 4, **dadurch gekennzeichnet, dass** der Zuführ- und der Abführförderer (1, 2) sich parallel zueinander und in einem geringen Abstand voneinander erstrecken und dass die Förderbänder (4, 5) des Puffersystems (3) sich parallel zu dem Zuführ- und dem Abführförderer (1, 2) des Puffersystems erstrecken und teilweise zwischen ihnen angeordnet sind.

7. Fördereinrichtung nach einem der voranstehenden Ansprüche, **dadurch gekennzeichnet, dass** Detektoren (13) an dem Zuführ- und an dem Abführförderer (1, 2) angeordnet sind, welche den Grad der Belegung dieser Förderer bestimmen und diese Information an eine Spurkontrolleinheit weiterleiten, so dass die Geschwindigkeiten des Zuführ- und des Abführförderers so weit wie möglich aufeinander abgestimmt sind.

8. Fördereinrichtung nach einem der voranstehenden Ansprüche, **dadurch gekennzeichnet, dass** ein oder mehrere Detektoren (13) an dem Zuführ- und an dem Abführförderband (4, 5) des Puffersystems (3) angeordnet sind.

9. Fördereinrichtung nach einem der voranstehenden Ansprüche, **dadurch gekennzeichnet, dass** ein Endschalter (14) an beiden Enden das Bewegungspfades der Umlenkschiene (9, 9') vorgesehen ist.

## Revendications

1. Dispositif convoyeur ayant un système tampon (3) comprenant une bande transporteuse d'alimentation (4) et une bande transporteuse d'évacuation (5) s'étendant parallèlement et à une faible distance l'une de l'autre, lesdites bandes transporteuses (4, 5) pouvant être entraînées dans des sens opposés, un rail de dérivation animé d'un mouvement de va-et-vient (9, 9') étant disposé au-dessus desdites bandes transporteuses (4, 5), ledit rail étant relié à une plaque de guidage (10) située entre lesdites bandes transporteuses à une certaine distance du rail de dérivation de sorte que des objets (6) peuvent se déplacer entre ledit rail de dérivation (9, 9') et ladite plaque de guidage (10), le dispositif de transport comprenant un convoyeur d'alimentation (1) relié à la bande transporteuse d'alimentation (4) du système tampon (3) et un convoyeur d'évacuation (2) relié à la bande transporteuse d'évacuation (5) du système tampon, dans lequel les vitesses des convoyeurs d'alimentation (1) et d'évacuation (2) peuvent être contrôlées séparément au moyen de détecteurs (13) positionnés sur ledit convoyeur d'alimentation et ledit convoyeur d'évacuation, **caractérisé en ce qu'**un ou plusieurs détecteurs (12) sont montés sur la partie du rail de dérivation (9, 9') située au-dessus de la bande transporteuse d'évacuation (5) dudit système tampon (3), les détecteurs (12, 13) peuvent avoir différentes formes, telles que des cellules photoélectriques de palpeur ou des palpeurs à ultrasons et analogues, les signaux délivrés par lesdits détecteurs (12, 13) étant traités électroniquement et servant à contrôler les vitesses des différentes parties (1, 2, 4, 5, 9, 10) dudit dispositif de transport.

2. Dispositif convoyeur selon la revendication 1, **caractérisé en ce qu'**un rail de guidage courbe (7) est disposé au-dessus du convoyeur d'alimentation (1), ledit rail ayant une forme telle que les objets (6) provenant du convoyeur d'alimentation (1) seront poussés sur la bande transporteuse d'alimentation (4) du système tampon (3) de manière uniformément répartie, un guide latéral stationnaire (8) étant situé entre les bandes transporteuses (4, 5) du système tampon (3).

3. Dispositif convoyeur selon la revendication 2, **caractérisé en ce que** la plaque de guidage (10) est reliée au guide latéral (8) lorsque le rail de dérivation (9, 9') est le plus proche des convoyeurs d'alimentation et d'évacuation (1, 2).

4. Dispositif convoyeur selon l'une des revendications précédentes, **caractérisé en ce qu'**un rail de guidage d'évacuation (11), qui peut être relié au guide latéral (8), est disposé à la transition de la bande transporteuse d'évacuation (5) du système tampon (3) vers le convoyeur d'évacuation (2).

5. Dispositif convoyeur selon l'une des revendications précédentes, **caractérisé en ce que** les convoyeurs d'alimentation et d'évacuation (1, 2) sont pratiquement alignés et que les bandes transporteuses (4, 5) du système tampon (3) sont orthogonales auxdits convoyeurs.

6. Dispositif convoyeur selon l'une des revendications 1 à 4, **caractérisé en ce que** les convoyeurs d'alimentation et d'évacuation (1, 2) s'étendent parallèlement et à une légère distance l'un de l'autre, et que les bandes transporteuses (4, 5) du système tampon (3) s'étendent parallèlement auxdits convoyeurs d'alimentation et d'évacuation (1, 2) dudit système tampon et sont en partie situées entre eux.

7. Dispositif convoyeur selon l'une des revendications précédentes, **caractérisé en ce que** des détecteurs (13) sont situés sur les convoyeurs d'alimentation et d'évacuation (1, 2), déterminant le degré d'occupation de ces convoyeurs et transmettent cette information à une unité de contrôle de piste, de sorte que les vitesses des convoyeurs d'alimentation et d'évacuation sont adaptées l'une à l'autre autant que possible.

8. Dispositif convoyeur selon l'une des revendications précédentes, **caractérisé en ce qu'**un ou plusieurs détecteurs (13) sont situés sur les bandes transporteuses d'alimentation et d'évacuation (4, 5) du système tampon (3).

9. Dispositif convoyeur selon l'une des revendications précédentes, **caractérisé en ce qu'**un commutateur d'extrémité (14) est disposé aux deux extrémités de la trajectoire de mouvement du rail de dérivation (9, 9').
